# EUROPEAN PATENT SPECIFICATION

(11) **EP 0 433 251 B1**
(45) Date of publication and mention of the grant of the patent: **21.06.1995**
(21) Application number: 90850364.2
(22) Date of filing: 02.11.1990
(51) Int. Cl.: G05D 7/01, F24F 11/047

(54) **A method and an arrangement for adjusting the settings of flow regulators**
Verfahren und Vorrichtung zur Änderung der Einstellung von Durchflussreglern
Procédé et dispositif pour ajustement de réglage de régulateurs de débit

(30) Priority: 15.11.1989 SE 8903831
(43) Date of publication of application: 19.06.1991
(73) Proprietor: Stifab Farex AB, S-273 35 Tomelilla (SE)
(72) Inventor: Nybom, Lars Göran, S-233 60 Lund (SE)
(74) Representative: Lundin, Björn-Eric

(56) References cited:
- EP-A- 0 192 335
- DE-A- 2 137 492
- DE-A- 2 432 660
- DE-B- 2 405 128
- US-A- 4 042 173
- US-A- 4 413 776

## Description

The present invention relates to a method and to an arrangement for controlling a fluid-flow regulating device, comprising maintaining a pressure or pressure difference in a fluid flow duct at a selected, substantially constant value, causing said pressure or pressure difference to act on a pivotally supported lever device so as to move the lever in a first direction of rotation, whereas the weight of the lever moves it in a second direction of rotation, which is opposite to the said first direction of rotation, so that said lever is in a position of balance between its two terminal positions of rotation when the selected value of said pressure of pressure difference is reached, driving the regulation device via an operating unit by means of a driving fluid flow established by the fluid-flow in said duct between a chosen loaction at said flow duct in which the fluid is not regulated by the regulating device, and the atmosphere and using the movement of the lever in the said first direction of rotation to cause at least part of the driving fluid flow to pass into the operating unit, when so required for control purposes.

An arrangement for adjusting the settings of flow regulators is known from our earlier Patent Specification No. SE-B-458 802 and from the corresponding European Specification No. EP-A-0 285 588. According to this known technique, control is effected with the aid of a cylinder assembly which has a vertical cylinder axis and in which there is mounted a readily moved, pressure-detecting body which, together with said cylinder, defines a pressure space which communicates with a ventilation passageway at a selected point therein. The pressuredetecting body has a mass which corresponds to a chosen pressure at said point in the passageway and is intended to balance the pressure acting on the body. This arrangement solves many problems where previously it was possible to use only manually adjustable throttle valves, since it has not been feasible to use earlier arrangements of this kind at reasonable costs, because of their imprecision and because of the poor control function that they provide. One general problem in this regard is that subsequent to establishing that the air flow to one room or location is correct, or at least lies within acceptable tolerances, a subsequent change in the setting of the valve function in a duct or channel in another room or location in the same building complex will result in a change in the setting of the first mentioned location. The task of adjusting the valve settings in different locations or rooms of a building is therefore particularly time-consuming and it is extremely seldom that the desired air flow to respective locations can be achieved satisfactorily in practice. Although our earlier proposed arrangement is able to solve many problems of this nature, the work involved in adjusting the valves is highly complicated, even with this known arrangement, and it is often necessary to change the mass of the pressure-detecting body manually, with the aid of different changeable tare weights. Consequently, there is a need for an arrangement which will enable such adjustments to be made in a simpler and more flexible fashion, particularly in the case of more complicated ventilation systems in large building complexes in which disturbances of the aforesaid kind occur to such extent as to cause the necessary adjustments to be both time-consuming and not-readily achievable.

One method of solving the aforesaid adjustment problem is to replace the cylinder-mounted pressure-detecting body with a lever device constructed to as to be self-adjusting in relation to the prevailing pressure or pressure difference in a manner such as to be held in equilibrium between its two terminal positions when the selected pressure or pressure difference is reached. The centre of gravity of this lever device can be displaced in various ways, either manually or automatically. Arrangements and methods which utilize such lever devices operating in accordance with the principles set forth in the introductory portion are described in DE-A-2432660, in EP-A-0 192 335 and in DE-A-24 32 660. One drawback with these known arrangements and methods, however, is that control cannot be achieved with the accuracy desired in present day ventilation systems, which are becoming more and more sophisticated.

It has now been found possible to provide a method for adjusting the settings of regulating devices in accordance with the introduction which, in relation to the present standpoint of techniques will enable adjustments to be made much more simply than was previously the case while, at the same time, maintaining a high degree of regulator accuracy. The inventive method is set forth in the following Claim 1. The invention also relates to an arrangement for carrying out the method, this arrangement being set forth in the following Claims 2.

The invention will now be described in more detail with reference to the accompanying drawings, Figures 1 and 2 of which each illustrate the principles of the inventive method applied to a terminal air supply circuit in the ventilation system and to an exhaust-air circuit therein; and Figure 3 illustrates a preferred embodiment of the arrangement for carrying out the method.

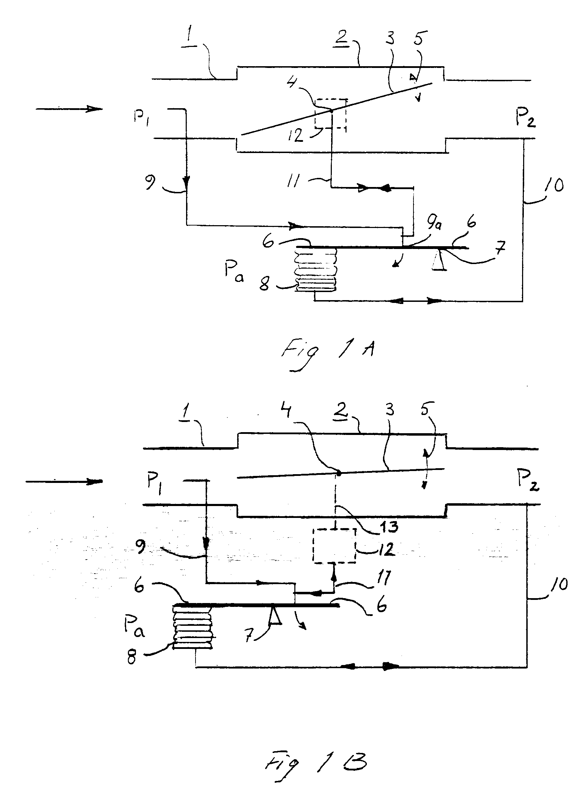

Figure 1 illustrates schematicaly an air flow duct or channel 1 through which air is caused to flow under the influence of a fan (not shown) located on the left of the duct. The direction of air flow is shown with an arrow. The pressure P₁ in the flow duct 1 shall be regulated to a selected value, i.e. the set-point value, with the aid of a regulating device 2 and a throttle valve, or butterfly valve 3 which is pivotally mounted on a shaft 4 for movement in directions indicated by arrows 5, said shaft, in the illustrated case, extending at right angles to the horizontal plane. The pressure prevailing at each moment in time is the real value and is designated P₂ in the illustrated case. The reference sign Pₐ signifies the air pressure in the room. A lever device 6 having one or two arms is supported at its fulcrum or turning point by an edge 7. The left-hand arm of the lever device is raised and lowered under the action of the pressure P₂. Although this can be effected in several ways, the illustrated embodiment employs a downwardly-open bellows 8 which at one end is attached in an airtight fashion to the left arm of the lever device 6, whereas the other, open end of said bellows is attached to a fixed point. A first line 9 extends from the flow channel at a location upstream of the regulating device 2, where the pressure P₁ prevails, so as to enable the line to be opened and closed at its outlet end 9a by the lever device 6 upon rotation of the arm around its moment axis in respective directions on the fulcrum edge 7. A second line 10 connects the bellows 8 with the selected point in the duct 1 at which the pressure has been adjusted by the regulating device 2 and assumes the value P₂ at each moment in time. A third line 11 functions to connect a fluid-driven, valve-operating unit 12 with the line 9 at a location immediately above the outlet end 9a of said line 9 and at an angle to the line 9 such as to create an ejector effect which is able to contribute to the air flow in the line 11. The operating unit 12 operates the valve 3 in response to the flow of air into and out of said unit through the line 11 and in response to the flow in said line 11. As illustrated in Figure 1A, the operating unit 12 can be positioned within the flow duct 1 in the regulating device 2, or externally of the duct, as illustrated in Figure 1B. The operating unit 12 may be constructed to activate the valve 3 directly, as indicated in Figure 1A, or indirectly as indicated in Figure 1B.

In this regard, it is important with respect to regulating accuracy that the operating unit 12 can be emptied of air sufficiently when the throttle 3 shall be fully closed or fully opened. This is achieved in accordance with the present invention through the special ejector effect, as indicated above.

This ejector effect enables the operating unit 12 to be emptied rapidly, despite the low pressure levels prevailing in the case of the applications concerned here, for instance ventilation systems. Thus, atmospheric pressure will never be reached in the operating unit 12 in the absence of the ejector effect from the line 9, unless mechanical auxiliaries, such as strong return springs, are provided for emptying the operating unit 12. In cases such as these, a greater pressure is required, however, for delivering fluid to the operating unit 12, and the arrangement will not then operate as a complete arrangement at the low pressures prevailing in conventional ventilation systems. The arrangement can then only be caused to function satisfactorily by enlarging the active surfaces of the operating unit 12 to an extent sufficient for the purpose intended, although the outer dimensions of the unit would then be prohibitive for the purposes intended.

In the case of the directly acting embodiment illustrated in Figure 1A, the outlet 9a of the line 9 is directed onto and sealingly abuts the same arm of the lever device 6 as that to which the bellows 8 is attached. Thus, the lever device 6 of this embodiment may have only one single arm. When the pressure P₂ is sufficiently high, the outlet 9a will be closed completely by the lever device 6, due to expansion of the bellows 8. The arm 6 is then located in its higher terminal position, therewith establishing direct communication between the lines 9 and 11. All air will now flow from the line 9, through the line 11 and into the operating unit 12, which therewith throttles the valve 3 and causes the pressure P₂ to fall. When the pressure P₂ falls, the bellows 8 is squeezed or collapsed and when the pressure P₂ has reached a sufficiently low value, the outlet 9a of the line 9 will be fully opened as a result of downward movement of the lever device 6 at the contact position. All air through the line 9 can thus flow freely through the outlet 9a and the air present in the operating unit 12 will be caused to flow out through the line 11, under the influence of the pressure P₂, thereby opening the throttle valve 3. Thus, when apposition of equilibrium or balance is reached at some point between these terminal positions of the lever device 6, no air will flow to or from the operating unit 12 through the line 11. This position of equilibrium can be readily selected at some point between the terminal positions of the lever device 6, by moving its centre-of-gravity point, therewith enabling a corresponding pressure P₂ to be held substantially constant. Thus, when the lever device 6 is in equilibrium, the pressure P₂ can be set at a selected value, by changing the centre-of-gravity position of the lever 6, for instance by displacing a weight (not shown) along said lever device.

In the case of the indirectly acting embodiment illustrated in Figure 1B, the outlet 9a of the line 9 is directed onto the right arm of the lever device 6. The operating unit 12 is then configured so that the valve 3 will be opened at an elevated pressure and vice versa, through the action of a device indicated at 13. When the pressure P₂ increases, the outlet 9a is opened successively until the lever device 6 reaches one terminal position of its rotation, in which all air through the line 9 is able to exit freely and the operating unit 12 is also emptied of air as a result of the influence exerted by atmospheric pressure and the ejector effect provided by the flow in the line 9, so as to close the valve 3. When the pressure P₂ falls, the outlet 9a is closed successively until the right arm of the lever device 6 sealingly abuts the outlet 9a, said lever device 6 having then reached its second terminal position of rotation. All air will now flow through the line 9 and into the operating unit 12, through the line 11, wherewith the pressure in the operating unit 12 increases and the valve 3 is opened and the pressure P₂ rises. The same conditions as those described above with reference to Figure 1A apply when the lever device is in equilibrium or balanced.

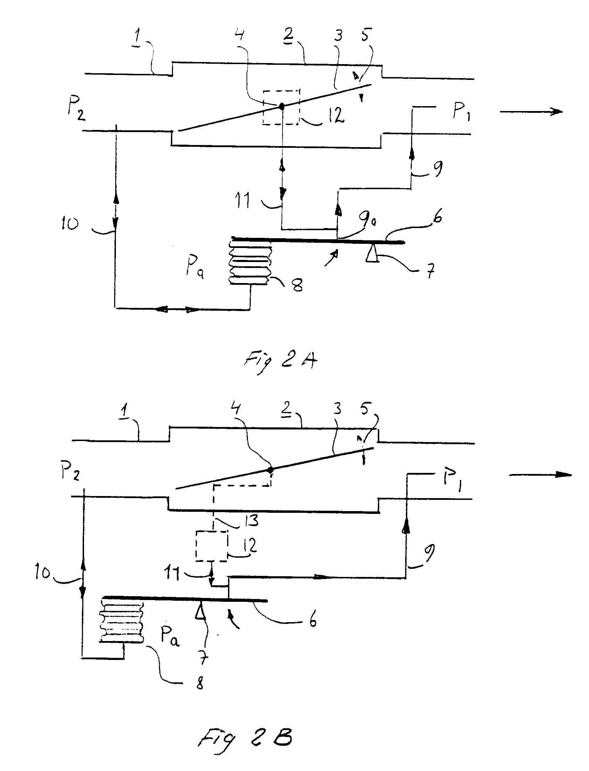

Figure 2 illustrates schematically an exhaust air system, in which Figure the Figure 2A illustrates a directly acting embodiment and Figure B illustrates an indirectly acting embodiment. In operation, system control is effected principly in the same manner as that described with reference to the supply air system illustrated in Figure 1, although in the system illustrated in Figure 2 the pressures P₁ and P₂ have been reversed geographically in the duct, where a fan (not shown) to the right of the duct draws air in the direction illustrated by an arrow. In this case, the pressure P₂ upstream of the regulating device 2 is thus regulated to a selected constant value. The operating unit 12 is constructed so as to be influenced on its outside by the pressure P₁. In the case of the embodiment illustrated in Figure 1A, the maximum force which causes the operating unit 12 to open and close the valve 3 is proportional to the pressure difference P₁-P₂, whereas the smallest force is proportional to the pressure difference Pₐ-P₂. Corresponding values for the indirectly acting embodiment illustrated in Figure 1B are maximum P₁-Pₐ and minimum Pₐ-Pₐ (i.e. zero). In the embodiments illustrated in Figure 2, corresponding forces are maximum Pₐ-P₁ and minimum P₁-P₁ (i.e. zero) in the case of the directly acting system and maximum Pₐ-P₁ and minimum P₁-P₁ (i.e. zero) respectively with the indirectly acting system.

In a manner corresponding to that illustrated in Figures 1 and 2, the pressure differences can also be regulated by using two regulating devices and by regulating and controlling pressure at two points in a corresponding manner. In this case, two control systems of the aforedescribed kind can be caused to coact with one another. It is also possible to permit each pressure difference to act on solely one lever device, for instance by arranging each of two bellows on a respective arm of the lever.

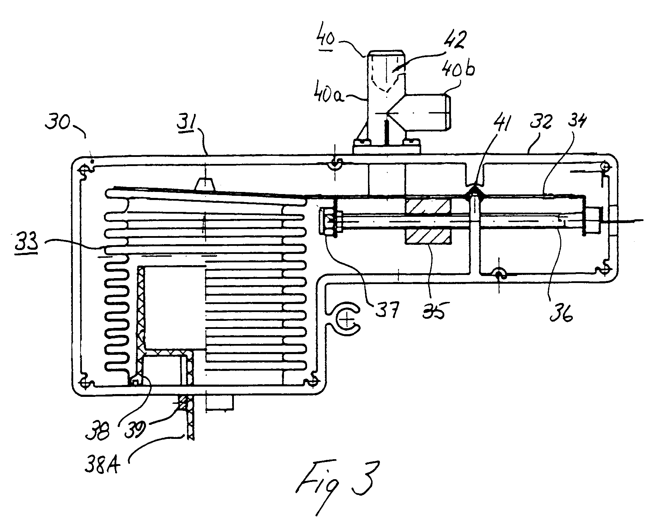

Figure 3 illustrates a preferred arrangement for controlling a regulating device, here called a control unit.

The control unit is generallly referenced 30 and includes a housing 31, 32, wherein 31 identifies the bellows part of the housing and 32 its valve part. Arranged in the housing 31, 32 is a bellows 33 and a device 34, referred to her as a balance lever. The balance lever device 34 has provided thereon a weight 35 which can be displaced along the lever arm with the aid of a setting screw 36. The balance lever 34 and the setting screw 36 with weight 35 are connected by means of a locking nut 37. The open end of the bellows 33 is fitted onto a bellows holder 38, which extends slightly into the bellows 33, so as to prevent said bellows from "balooning" out of the control unit 30 when the bellows 33 is subjected to high overpressures. Provided in the open end of the bellows-holder 38 is a hose connection 38A for connection to a flow duct at the location thereon at which a selected pressure shall be held constant. The bellows holder 38, and therewith also the bellows 33, is affixed to the bellows part 31 of the housing by means of a locking ring 39. A pipe branching 40 having a straight through-passing part 40a and a part 40b at right angles thereto is screwed firmly to the valve part 32 of the housing, so that one end of the through-passing part can lie sealingly against the balance lever 34. The part 40b of the pipe branching 40 may also extend at an angle smaller than 90° to that part of the through-passing part 40a which faces upwards in the drawing. The balance lever 34 has to the left of the drawing a ring-shaped part which is attached to the bellows 33 in an airtight fashion and which balances on an edge 41 mounted in the valve part 32 of the housing. The length-extension of the edge in abutment with the balance lever 34 is relatively long, so as to render negligible deformation resulting from wear over a long period of use. The gravitational force exerted by the balance lever 34 constitutes a reference pressure to the pressure prevailing in bellows 33. In principle, the position taken by the balance lever 34 decides how much air shall flow to or from an operating unit of a regulating device through the transverse pipe of the pipe branching 40, as earlier described. The third end of the pipe branching 40 is intended to be connected to a supply air duct having a regulating device mounted therein, as earlier described.

Since the balance lever 34 is a movable part in the control unit 30, the feedback system is influenced by the mass inertia exhibited by the balance lever 34. The greater the mass inertia the smaller the margin towards instability and self-oscillation. Consequently, it is important to keep the mass of the lever device 34 as low as possible. One method of reducing the mass of the arm is to drill so-called lightening holes therein.

In order to facilitate movement of the centre-of-gravity of the balance lever 34, the weight 35 moves in elongated grooves on the balance lever 34. Because the trunnions of the weight 35 are visible from both sides of the lever 34, the position of the weight, and therewith the pressure set on the bellows 33, can be read-off directly. The lever 34 is preferably provided with a scale which facilitates reading of the set pressure. The sise of the weight 35 is suitably adapted in a manner which will enable simple adjustments of a single pascal in pressure to be made, while keeping the construction of the lever 34 compact at the same time. A small weight 35 will therewith provide a more widely spaced scale and more accurate adjustment, but also a larger lever 34.

The upper pipe-part of the pipe branching 40 is preferably provided with a velocity-increasing nozzle 42 which will contribute to further improving the ejector effect and therewith enabling rapid evacuation of the operating unit through said ejector effect in those instances when the operating unit, and therewith the valve, is to be adjusted to one of its terminal positions, as before described.

The invention is not restricted to the aforedescribed and illustrated embodiments since various modifications can be made. For instance, the principles of the invention can be applied for controlling fluids other than air, to which latter primary reference is made.

## Claims

1. A method for controlling a fluid-flow regulating device (2) in order to maintain a pressure or pressure difference in a fluid flow duct (1) at a selected, substantially constant value (P₂) comprising, causing said pressure or pressure difference (P₂) to act on a pivotally supported lever device (6) so as to move the lever (6) in a first direction of rotation, whereas the weight of the lever (6) moves it in a second direction of rotation, which is opposite to the said first direction of rotation, so that said lever (6) is in a position of balance between its two terminal positions of rotation when the selected value (P₂) of said pressure or pressure difference is reached,
driving the regulation device (2) via an operating unit (12) by means of a driving fluid flow (9) established by the actual pressure difference between the atmosphere pressure (Pₐ) and the pressure (P₁) at a chosen location at which the fluid is not regulated by the regulation device (2),
using the movement of the lever (6) in the said first direction of rotation to cause at least part of the driving fluid flow (9) to pass into the operating unit (12), when so required for control purposes, **characterized** by using the movement of the lever (6) in the said second direction of rotation to cause an increased flow of driving fluid and thereby providing on ejector effect which causes fluid to flow out of the operating unit (12), when so required for control purposes, said ejector effect adapted to permit emptying the operating unit (12) substantially completely, so as to precisely control the flow of fluid respectively into and out of the operating unit (12) of the regulating device (2) in accurate response to the pressure or pressure difference (P₂) acting on the lever device (6) at each moment in time.

2. An arrangement for controlling a fluid-flow regulating device (2) operating to maintain a pressure or presure difference in a fluid flow duct (1) at a selected substantially constant value (P₂), said arrangement comprising a pivotally supported lever device (6,34); a bellows (8,33) which coacts with the lever device (6,34) and moves the lever in one rotational direction, whereas the weight of the lever moves it in the opposite rotational direction, and which bellows (8,33) is intended to influence the position of the lever device (6,34) and is driven by the pressure (P₂) regulated by the regulating device (2), **characterized** by a pipe branching (40) having a straight through-passing part (40a) and a part (40b) which extends at an angle to the throughpassing part (40a), said pipe branching (40) functioning as an ejector for emptying an operation unit (12) of said regulating device (2), when a fluid flow through the straight through-passing part (40a) increases; one end of said through-passing part (40a) being capable of being brought into sealing abutment with one of the arms of the lever device (6, 34); whereas the corresponding other end of said through-passing part is intended to communicate with the flow duct (1) at a location therein at which the fluid flow is not regulated by the regulating device (2) and the angle part (40b) of said pipe branching is intended to communicate with the fluid-driven operating unit (12) forming part of the regulating device (2) and extends at an angle such as to produce an ejector effect in said pipe branching (40).

3. An arrangement according to Claim 2 for maintaining a pressure difference of selected value, **characterized** in that said arrangement includes a lever device (6,34) having two arms; a further bellows (8,33) coacting with said arm, and a further pipe branching (40) arranged in a corresponding manner.

4. An arrangement according to Claim 2 or 3, **characterized** in that each pipe branching (40) is provided with a velocity increasing nozzle (42) at that end of the straight throughpassing part (40a) which is intended to communicate with the flow duct (1).

5. An arrangement according to Claim 4, **characterized** in that the nozzle (42) is exchangeable.

## Patentansprüche

1. Verfahren zum Regeln einer Fluidströmung regulierenden Einrichtung (2), um einen Druck oder eine Druckdifferenz in einer Fluidströmungsleitung (1) auf einem ausgewählten, im wesentlichen konstanten Wert (P₂) zu halten, wobei das Verfahren die Schritte aufweist: Veranlassen, daß der Druck oder die Druckdifferenz (P₂) auf eine schwenkbar gehalterte Hebeleinrichtung (6) wirkt, so daß dadurch der Hebel (6) in einer ersten Drehrichtung bewegt wird, während das Gewicht des Hebels (6) diesen in einer zweiten Drehrichtung bewegt, welche der ersten Drehrichtung entgegengesetzt ist, so daß der Hebel (6) sich in einer Gleichgewichtsposition zwischen seinen beiden Endstellungen der Drehung befindet, wenn der ausgewählte Wert (P₂) des Druckes oder der Druckdifferenz erreicht ist,
Antreiben der Reguliereinrichtung (2) über eine Betriebseinheit (12) mit Hilfe eines Antriebsfluidstromes, der bereitgesteilt wird durch die tatsächliche Druckdifferenz zwischen dem atmosphärischen Druck (Pₐ) und dem Druck (P₁) an einer ausgewählten Stelle, an welcher das Fluid nicht durch die Reguliereinrichtung (2) reguliert wird,
Benutzen der Bewegung des Hebels (6) in der ersten Drehrichtung, um zu bewirken, daß zumindest ein Teil des Antriebsfluidstromes (9) in die Betriebseinheit (12) eintritt, wenn dies für Regelzwecke erforderlich ist, gekennzeichnet durch: Benutzen der Bewegung des Hebels (6) in der zweiten Drehrichtung, um eine gesteigerte Strömung von Antriebsfluid zu bewirken und um dadurch einen Strahleffekt bereitzustellen, der bewirkt, daß Fluid aus der Betriebseinheit (12) herausströmt, wenn dieses für Regelzwecke erforderlich ist, wobei die Strahlwirkung so ausgelegt ist, daß sie das im wesentlichen vollständige Entleeren der Betriebseinheit (12) ermöglicht, um so zu jedem Zeitpunkt den Fluidstrom in die Betriebseinheit (12) der Reguliereinrichtung (2) hinein oder aus dieser heraus genau zu regeln unter exaktem Ansprechen auf den Druck oder die Druckdifferenz (P₂), die auf die Hebeleinrichtung (6) wirkt.

2. Anordnung zum Regeln einer Fluidstromreguliereinrichtung (2), die so arbeitet, daß sie einen Druck oder eine Druckdifferenz in einer Fluidströmungsleitung (1) auf einem ausgewählten, im wesentlichen konstanten Wert (P₂) hält, wobei die Anordnung eine schwenkbar gehalterte Hebeleinrichtung (6, 34) aufweist, einen Balg (8, 33) aufweist, der mit der Hebeleinrichtung (6, 34) zusammenwirkt und den Hebel in einer Drehrichtung bewegt, während das Gewicht des Hebels diesen in der entgegengesetzten Drehrichtung bewegt, wobei der Ba!g (8, 33) dafür vorgesehen ist, die Position der Hebeleinrichtung (6, 34) zu beeinflussen, und durch den Druck (P₂), der durch die Reguliereinrichtung (2) reguliert wird, angetrieben wird, gekennzeichnet durch eine Rohrverzweigung (40), die ein gerades Durchgangsteil (40a) und ein Teil (40b) hat, welches sich unter einem Winkel zu dem Durchgangsteil (40a) erstreckt, wobei die Rohrverzweigung (40) als eine Strahleinrichtung bzw. Ejektorpumpe funktioniert, um eine Betriebseinheit (12) der Reguliereinrichtung (2) zu entleeren, wenn eine Fluidströmung durch das gerade Durchgangsteil (40a) zunimmt, wobei ein Ende des Durchgangsteiles (40a) in dichtende Anlage mit einem der Arme der Hebeleinrichtung (6,34) gebracht werden kann, während das entsprechende andere Ende des Durchgangsteiles dafür vorgesehen ist, mit der Strömungsleitung (1) an einer Stelle in Verbindung zu stehen, an welcher die Fluidströmung durch die Reguliereinrichtung (2) nicht reguliert wird, und wobei der Winkelteil (40b) der Rohrverzweigung für die Verbindung mit der durch das Fluid angetriebenen Betriebseinheit (12) vorgesehen ist, welche einen Teil der Reguliereinrichtung (2) bildet, und sich unter einem solchen Winkel erstreckt, daß eine Ejektorwirkung in der Rohrverzweigung (40) hervorgerufen wird.

3. Anordnung nach Anspruch 2 für das Aufrechterhalten einer Druckdifferenz auf einem ausgewählten Wert, dadurch gekennzeichnet, daß die Anordnung eine Hebeleinrichtung (6, 34) aufweist, die zwei Arme hat, wobei ein weiterer Balg (8, 33) mit dem Arm zusammenwirkt und eine weitere Rohrverzweigung (40) in entsprechender Weise angeordnet ist.

4. Anordnung nach Anspruch 2 oder 3, dadurch gekennzeichnet, daß jede Rohrverzweigung (40) mit einer die Geschwindigkeit steigernden Düse (42) an einem Ende des geraden Durchgangsteiles (40a) versehen ist, welches für die Verbindung mit der Strömungsleitung (1) vorgesehen ist.

5. Anordnung nach Anspruch 4, dadurch gekennzeichnet, daß die Düse (42) austauschbar ist.

## Revendications

1. Procédé de commande d'un dispositif (2) de régulation d'un écoulement de fluide afin de maintenir une pression ou différence de pression dans une conduite (1) d'écoulement de fluide à une valeur (P₂) choisie sensiblement constante, comprenant les étapes de :
amener la pression ou différence de pression (P₂) à agir sur un dispositif (6) à levier, supporté de façon à pivoter, de manière à déplacer le levier (6) dans un premier sens de rotation tandis que le poids du levier (6) le déplace dans un second sens de rotation qui est opposé audit premier sens de rotation, de façon que le levier (6) soit dans une position d'équilibre entre ses deux positions extrêmes de rotation lorsque la valeur choisie (P₂) de la pression ou différence de pression est atteinte,
commander le dispositif de régulation (2) par l'intermédiaire d'un ensemble fonctionnel (12) au moyen d'un écoulement de fluide de commande (9) établi par la différence de pression réelle entre la pression atmosphérique (Pₐ) et la pression (P₁) en un endroit choisi où le fluide n'est pas réglé par le dispositif de régulation (2),
utiliser le mouvement du levier (6) dans ledit premier sens de rotation afin d'amener au moins partiellement l'écoulement de fluide de commande (9) à passer dans l'ensemble fonctionnel (12) lorsque cela est nécessaire à des fins de commande,
caractérisé par une utilisation du mouvement du levier (6) dans le second sens de rotation afin de provoquer un écoulement accru du fluide de commande et de procurer par cela un effet d'éjecteur qui amène du fluide à s'écouler hors de l'ensemble fonctionnel (12) lorsque cela est nécessaire pour des fins de commande, l'effet d'éjecteur étant adapté pour permettre de vider sensiblement complètement l'ensemble fonctionnel (12) de façon à commander avec précision l'écoulement de fluide respectivement dans et hors de l'ensemble fonctionnel (12) du dispositif de régulation (2) de façon à répondre avec précision à la pression ou différence de pression (P₂) agissant sur le dispositif à levier (6) à chaque moment du temps.

2. Agencement de commande d'un dispositif de régulation (2) d'un écoulement de fluide, agissant pour maintenir une pression ou différence de pression dans une conduite (1) d'écoulement de fluide à une valeur (P₂) choisie sensiblement constante, l'agencement comprenant un dispositif (6, 34) à levier supporté de façon à pivoter, un soufflet (8, 33) qui agit avec le dispositif à levier (6, 34) et qui déplace le levier dans un sens de rotation tandis que le poids du levier le déplace dans le sens de rotation opposé, ce soufflet (8, 33) étant destiné à influencer la position du dispositif à levier (6, 34) et étant commandé par la pression (P₂) réglée par le dispositif de régulation (2), caractérisé par une bifurcation de tuyau (40) présentant une partie (40a) droite de passage de part en part et une partie (40b) qui s'étend selon un angle par rapport à la partie (40a) passant de part en part, la bifurcation de tuyau (40) fonctionnant comme un éjecteur afin de vider un ensemble fonctionnel (12) du dispositif de régulation (2) lorsqu'un écoulement de fluide à travers la partie (40a) droite et passant de part en part augmente, une extrémité de la partie (40a) passant de part en part pouvant être mise en aboutement d'étanchéité avec un des bras du dispositif à levier (6, 34) tandis que l'autre extrémité correspondante de la partie passant de part en part est destinée à communiquer avec la conduite d'écoulement (1) en un endroit dans celle-ci où l'écoulement de fluide n'est pas réglé par le dispositif de régulation (2) et la partie en angle (40b) de la bifurcation de tuyau étant destinée à communiquer avec l'ensemble fonctionnel (12) commandée de fluide et qui fait partie du dispositif de régulation (2) et s'étendant selon un angle de façon à produire un effet d'éjecteur dans la bifurcation de tuyau (40).

3. Agencement suivant la revendication 2, destiné à maintenir une différence de pression d'une valeur choisie, caractérisé en ce que l'agencement comporte un dispositif à levier (6, 34) présentant deux bras, un autre soufflet (8, 33) agissant avec le bras, et une autre bifurcation de tuyau (40) agencée d'une manière correspondante.

4. Agencement suivant la revendication 2 ou 3, caractérisé en ce que chaque bifurcation (40) de tuyau est équipée d'un ajutage (42) augmentant la vitesse et situé à l'extrémité de la partie (40a) droite passant de part en part et qui est destinée à communiquer avec la conduite d'écoulement (1).

5. Agencement suivant la revendication 4, caractérisé en ce que l'ajutage (42) peut être remplacé.
